# EUROPEAN PATENT APPLICATION

(11) **EP 4 672 826 A1**
(43) Date of publication of application: **31.12.2025**
(21) Application number: 24778027.3
(22) Date of filing: 26.03.2024
(51) Int. Cl.: H04W 52/02

(54) **COMMUNICATION METHOD, APPARATUS, AND SYSTEM**

(30) Priority: 30.03.2023 CN 202310361923
(71) Applicant: HUAWEI TECHNOLOGIES CO., LTD., Shenzhen, Guangdong 518129 (CN)
(72) Inventor: FANG, Songlei, Shenzhen, Guangdong 518129 (CN); LI, Chenwan, Shenzhen, Guangdong 518129 (CN)
(74) Representative: Gill Jennings & Every LLP
(86) International application number: PCT/CN2024/083894
(87) International publication number: WO 2024/199239

(57) **Abstract**

This application provides a communication method, apparatus, and system, and belongs to the field of communication technologies. In the method, a network device may send first indication information to a terminal based on service requirements of different services, to indicate the terminal to enter a first sleep mode whose wake-up duration matches a service requirement of the terminal, so that even if the terminal is woken up in the first sleep mode, subsequent data transmission of the terminal can still meet the service requirement of the terminal.

## Description

This application claims priority to Chinese Patent Application No. 202310361923.9, filed with the China National Intellectual Property Administration on March 30, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

Discontinuous reception (discontinuous reception, DRX) means that a terminal can periodically monitor a physical downlink control channel (physical downlink control channel, PDCCH) and sleep, to save energy. For example, in a DRX cycle, the terminal may enter a sleep mode, and does not monitor the PDCCH, to save energy; or the terminal may be woken up in a sleep mode, and monitors the PDCCH, to receive and send data.

However, different services may have different service requirements, and how to ensure that data transmission of the terminal after sleep can still meet a service requirement is a hot issue in current research.

### SUMMARY

Embodiments of this application provide a communication method, apparatus, and system, so that data transmission of a terminal after sleep can still meet a service requirement.

To achieve the foregoing objective, this application uses the following technical solutions.

According to a first aspect, a communication method is provided. The method includes: receiving first indication information, and entering a first sleep mode in response to the first indication information. The first indication information indicates a terminal to enter the first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal.

It may be understood that the method in the first aspect may be performed by the terminal, or may be performed by an apparatus included in the terminal, such as a chip, or may be performed by an apparatus including the terminal. This is not specifically limited.

Based on the methods in the first aspect and the second aspect, it can be learned that the network device may send the first indication information to the terminal based on service requirements of different services, to indicate the terminal to enter the first sleep mode whose wake-up duration matches a service requirement of the terminal, so that even if the terminal is woken up in the first sleep mode, subsequent data transmission of the terminal can still meet the service requirement of the terminal.

In a possible design solution, receiving the first indication information includes: receiving the first indication information in an active time of a discontinuous reception DRX cycle. To be specific, even if the terminal is in the active time of the DRX cycle, the terminal can immediately enter the first sleep mode based on the first indication information, to save energy.

Optionally, the method in the first aspect may further include: disabling, in response to the first indication information, at least one timer configured in the active time, where the at least one timer includes a DRX-inactivity timer or a DRX-on duration timer, to enable the terminal to enter the first sleep mode.

In a possible design solution, receiving the first indication information includes: receiving the first indication information in a non-active time of a DRX cycle. To be specific, although the terminal has entered a normal sleep mode in the non-active time of the DRX cycle, the terminal still needs to enter, based on the first indication information, the first sleep mode that matches a service requirement of the terminal.

In a possible design solution, receiving the first indication information includes: receiving the first indication information in a second sleep mode. The second sleep mode is a sleep mode that is different from the first sleep mode and that is in the plurality of sleep modes, so that flexible switching between the sleep modes is implemented.

In a possible design solution, the method in the first aspect may further include: receiving second indication information, where the second indication information indicates that the terminal needs to be woken up. In this way, the terminal is woken up in the first sleep mode in response to the second indication information, and enters any one of the following times: an active time, a DRX short cycle, or a DRX long cycle. The second indication information indicates that the terminal needs to be woken up. In other words, an occasion on which the terminal is woken up may be indicated by a network, to implement on-demand wake-up. In one aspect, a service requirement can be met, and in another aspect, terminal energy-saving can also be implemented.

Optionally, if the first sleep mode is a micro-sleep mode, the active time is entered, to ensure that data can be received and sent in a timely manner. Alternatively, if the first sleep mode is a light sleep mode, the DRX short cycle is entered. In the DRX short cycle, a data transmission latency is relatively low, and the terminal is relatively energy-saving, to consider both the data transmission latency and terminal energy-saving. Alternatively, if the first sleep mode is an ultra-deep sleep mode, a DRX long cycle is entered, to ensure that the terminal can be more energy-saving.

Optionally, the second indication information further indicates at least one of the following: whether to zero out an existing count of the DRX short cycle, whether to reuse the count of the DRX short cycle, or a quantity of DRX short cycles. To be specific, a quantity of the DRX short cycles and a counting manner can be flexibly indicated, to meet an actual requirement. Alternatively, the quantity of the DRX short cycles and the counting manner may be predefined in a protocol. This is not specifically limited.

Optionally, the second indication information may further indicate a quantity of DRX long cycles, that is, flexibly indicate the quantity of the DRX long cycles, to meet an actual requirement. Alternatively, the quantity of the DRX long cycles may be predefined in a protocol. This is not specifically limited.

Optionally, a time of being woken up in the first sleep mode is a first time. If the first sleep mode is a micro-sleep mode, a time at which the second indication information is received is the first time. To be specific, the terminal can be immediately woken up, and receive and send data in a timely manner. Alternatively, if the first sleep mode is a light sleep mode, a time at which the second indication information is received is a second time before the first time, and a time difference between the first time and the second time is duration required for being woken up in the light sleep mode. Alternatively, if the first sleep mode is an ultra-deep sleep mode, a time at which the second indication information is received is a third time before the first time, a time difference between the first time and the third time is duration required for being woken up in the ultra-deep sleep mode, and the time difference between the first time and the third time is greater than the time difference between the first time and the second time. To be specific, for the light sleep mode and the ultra-deep sleep mode, the network device needs to wake up the terminal in advance, to ensure that the terminal can receive and send data on a proper occasion subsequently.

Optionally, the method in the first aspect may further include: receiving third indication information in the any time or after the any time. The third indication information indicates the terminal to enter the DRX cycle or a sleep mode in the plurality of sleep modes. This may be specifically selected based on an actual situation, and is not specifically limited.

Optionally, entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, the second indication information used to wake up the main radio. For example, the bandwidth part is a bandwidth configured for the secondary radio to use in the at least partial time. In other words, the secondary radio may monitor the second indication information by using a specified resource only within a specified time, and for another time, the secondary radio may be disabled, to further save energy.

According to a second aspect, a communication method is provided. The method includes: obtaining first indication information, and sending the first indication information to a terminal. The first indication information indicates the terminal to enter a first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal.

It may be understood that the method in the second aspect may be performed by the network device, or may be performed by an apparatus included in the network device, such as a chip, or may be performed by an apparatus including the network device. This is not specifically limited.

In a possible design solution, sending the first indication information to the terminal includes: sending the first indication information to the terminal in an active time of a discontinuous reception DRX cycle of the terminal.

In a possible design solution, sending the first indication information to the terminal includes: sending the first indication information to the terminal in a non-active time of a DRX cycle of the terminal.

In a possible design solution, sending the first indication information to the terminal includes: sending the first indication information to the terminal when the terminal is in a second sleep mode, where the second sleep mode is a sleep mode that is different from the first sleep mode and that is in the plurality of sleep modes.

In a possible design solution, the method in the second aspect may further include: sending second indication information to the terminal, where the second indication information indicates that the terminal needs to be woken up.

Optionally, if the first sleep mode is a micro-sleep mode, the terminal enters the active time after being woken up; or if the first sleep mode is a light sleep mode, the terminal enters a DRX short cycle after being woken up; or if the first sleep mode is an ultra-deep sleep mode, the terminal enters a DRX long cycle after being woken up.

Optionally, the second indication information further indicates at least one of the following: whether to zero out an existing count of the DRX short cycle, whether to reuse the count of the DRX short cycle, or a quantity of DRX short cycles.

Optionally, the second indication information further indicates a quantity of DRX long cycles.

Optionally, a time at which the terminal is woken up is a first time; if the first sleep mode is a micro-sleep mode, a time at which the second indication information is sent to the terminal is the first time; or if the first sleep mode is a light sleep mode, a time at which the second indication information is sent to the terminal is a second time before the first time, and a time difference between the first time and the second time is duration required for being woken up in the light sleep mode; or if the first sleep mode is an ultra-deep sleep mode, a time at which the second indication information is sent to the terminal is a third time before the first time, a time difference between the first time and the third time is duration required for being woken up in the ultra-deep sleep mode, and the time difference between the first time and the third time is greater than the time difference between the first time and the second time.

Optionally, the method in the second aspect may further include: sending third indication information to the terminal in the any time or after the any time, where the third indication information indicates the terminal to enter the DRX cycle or a sleep mode in the plurality of sleep modes.

Optionally, that the terminal enters the first sleep mode means that a main radio enters the first sleep mode, and that the terminal is woken up means that the main radio is woken up; and a secondary radio is configured to monitor, in at least a partial time of the non-active time of the DRX cycle and on a preset bandwidth part, the second indication information used to wake up the main radio. For example, the bandwidth part is a bandwidth configured for the secondary radio to use in the at least partial time.

In addition, for technical effects of the method in the second aspect, refer to the technical effects of the method in the first aspect. Details are not described herein again.

According to a third aspect, a communication method is provided. The method includes: entering a first sleep mode when a non-active time of a discontinuous reception DRX cycle starts, receiving fourth indication information, and being woken up in the first sleep mode in response to the fourth indication information. The first sleep mode is a sleep mode that corresponds to duration of the DRX cycle and that is in a plurality of sleep modes, and duration required for waking up a terminal in the plurality of sleep modes is different from each other. The fourth indication information indicates that the terminal needs to be woken up.

It may be understood that the method in the third aspect may be performed by the terminal, or may be performed by an apparatus included in the terminal, such as a chip, or may be performed by an apparatus including the terminal. This is not specifically limited.

In a possible design solution, if the duration of the DRX cycle is greater than or equal to first duration, duration of a sleep period of the DRX cycle is relatively long, and the first sleep mode is an ultra-deep sleep mode, to save more energy. If the duration of the DRX cycle is less than the first duration and is greater than or equal to second duration, that is, the duration of the sleep period of the DRX cycle is moderate, the first sleep mode is a light sleep mode. In the light sleep mode, both sleep duration of the terminal and duration required for waking up the terminal are relatively moderate, so that both a data transmission latency and terminal energy-saving can be considered. If the duration of the DRX cycle is less than the second duration, that is, the duration of the sleep period of the DRX cycle is relatively short, the first sleep mode is a micro-sleep mode, to ensure that the terminal can be woken up in a timely manner, thereby further ensuring a data transmission latency. Duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

In another possible design solution, if the DRX cycle is a DRX long cycle, duration of a sleep period of the DRX long cycle is relatively, and the first sleep mode is an ultra-deep sleep mode, to save more energy. If the DRX cycle is a DRX short cycle, and no data is received or sent in the DRX short cycle, that is, duration of a sleep period of the DRX short cycle is moderate, the first sleep mode is a light sleep mode, to consider both a data transmission latency and terminal energy-saving. If the DRX cycle is the DRX short cycle, and data is received or sent in the DRX short cycle, that is, the duration of the sleep period of the DRX short cycle is relatively short, the first sleep mode is a micro-sleep mode, to further ensure a data transmission latency. Duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

In a possible design solution, entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, the fourth indication information used to wake up the main radio.

Optionally, the bandwidth part is a bandwidth configured for the secondary radio to use in the at least partial time.

In addition, for other technical effects of the method in the third aspect, refer to the technical effects of the method in the first aspect. Details are not described herein again.

According to a fourth aspect, a communication apparatus is provided. The communication apparatus includes modules configured to perform the method in the first aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the fourth aspect, and the receiving module is configured to implement a receiving function of the communication apparatus in the fourth aspect.

Optionally, the communication apparatus in the fourth aspect may further include a storage module. The storage module stores a program or instructions. When the processing module executes the program or the instructions, the communication apparatus is enabled to perform the method in the first aspect.

It may be understood that the communication apparatus in the fourth aspect may be a terminal, or may be a chip (system) or another part or component that may be disposed in a terminal, or may be an apparatus including a terminal. This is not limited in this application.

In addition, for technical effects of the communication apparatus in the fourth aspect, refer to the technical effects of the method in the first aspect. Details are not described herein again.

According to a fifth aspect, a communication apparatus is provided. The communication apparatus includes modules configured to perform the method in the second aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the fifth aspect, and the receiving module is configured to implement a receiving function of the communication apparatus in the fifth aspect.

Optionally, the communication apparatus in the fifth aspect may further include a storage module. The storage module stores a program or instructions. When the processing module executes the program or the instructions, the communication apparatus is enabled to perform the method in the second aspect.

It may be understood that the communication apparatus in the fifth aspect may be a network device, or may be a chip (system) or another part or component that may be disposed in a network device, or may be an apparatus including a network device. This is not limited in this application.

In addition, for technical effects of the communication apparatus in the fifth aspect, refer to the technical effects of the method in the second aspect. Details are not described herein again.

According to a sixth aspect, a communication apparatus is provided. The communication apparatus includes modules configured to perform the method in the third aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the sixth aspect, and the receiving module is configured to implement a receiving function of the communication apparatus in the sixth aspect.

Optionally, the communication apparatus in the sixth aspect may further include a storage module. The storage module stores a program or instructions. When the processing module executes the program or the instructions, the communication apparatus is enabled to perform the method in the third aspect.

It may be understood that the communication apparatus in the sixth aspect may be a terminal, or may be a chip (system) or another part or component that may be disposed in a terminal, or may be an apparatus including a terminal. This is not limited in this application.

In addition, for technical effects of the communication apparatus in the sixth aspect, refer to the technical effects of the method in the third aspect. Details are not described herein again.

According to a seventh aspect, a communication apparatus is provided. The communication apparatus may be a terminal device or a network device, or may be a chip (system) or another part or component disposed in the terminal device or the network device. The communication apparatus includes a processor. The processor is configured to perform the method in any one of the possible implementations of the first aspect to the third aspect.

In a possible design solution, the communication apparatus in the seventh aspect may further include a transceiver. When the communication apparatus is a terminal device or a network device, the transceiver may be a radio frequency module. When the communication apparatus is a chip (system) or another part or component in the terminal device or the network device, the transceiver may be an input/output interface, a pin, a circuit, or the like. The transceiver may be used by the communication apparatus in the seventh aspect to communicate with another communication apparatus.

In a possible design solution, the communication apparatus in the seventh aspect may further include a memory. The memory may be integrated with the processor, or may be separately disposed. The memory may be configured to store a computer program and/or data related to the method in any one of the possible implementations of the first aspect to the third aspect.

In this embodiment of this application, the communication apparatus in the seventh aspect may be a device that performs the method in any one of the possible implementations of the first aspect to the third aspect, or a chip (system) or another part or component that may be disposed in the device, or an apparatus including the device.

In addition, for technical effects of the communication apparatus in the seventh aspect, refer to the technical effects of the method in any one of the implementations of the first aspect or the third aspect. Details are not described herein again.

According to an eighth aspect, a communication apparatus is provided. The communication apparatus may be a terminal device or a network device, or may be a chip (system) or another part or component disposed in the terminal device or the network device. The communication apparatus includes a processor, where the processor is coupled to a memory, and the processor is configured to execute a computer program stored in the memory, to enable the communication apparatus to perform the method in any one of the possible implementations of the first aspect to the third aspect.

In a possible design solution, the communication apparatus in the eighth aspect may further include a transceiver. When the communication apparatus is a terminal device or a network device, the transceiver may be a radio frequency module. When the communication apparatus is a chip (system) or another part or component in the terminal device or the network device, the transceiver may be an input/output interface, a pin, a circuit, or the like. The transceiver may be used by the communication apparatus in the eighth aspect to communicate with another communication apparatus.

In this embodiment of this application, the communication apparatus in the eighth aspect may be a device that performs the method in any one of the possible implementations of the first aspect to the third aspect, or a chip (system) or another part or component that may be disposed in the device, or an apparatus including the device.

In addition, for technical effects of the communication apparatus in the eighth aspect, refer to the technical effects of the method in any one of the implementations of the first aspect to the third aspect. Details are not described herein again.

According to a ninth aspect, a communication apparatus is provided. The communication apparatus may be a terminal device or a network device, or may be a chip (system) or another part or component disposed in the terminal device or the network device. The communication apparatus includes: a processor and a memory, where the memory is configured to store a computer program, and when the processor executes the computer program, the communication apparatus is enabled to perform the method in any one of the implementations of the first aspect to the third aspect.

In a possible design solution, the communication apparatus in the ninth aspect may further include a transceiver. When the communication apparatus is a terminal device or a network device, the transceiver may be a radio frequency module. When the communication apparatus is a chip (system) or another part or component in the terminal device or the network device, the transceiver may be an input/output interface, a pin, a circuit, or the like. The transceiver may be used by the communication apparatus in the ninth aspect to communicate with another communication apparatus.

In this embodiment of this application, the communication apparatus in the ninth aspect may be a device that performs the method in any one of the possible implementations of the first aspect to the third aspect, or a chip (system) or another part or component that may be disposed in the device, or an apparatus including the device.

In addition, for technical effects of the communication apparatus in the ninth aspect, refer to the technical effects of the method in any one of the implementations of the first aspect to the third aspect. Details are not described herein again.

According to a tenth aspect, a communication method is provided. The communication method includes the method in any one of the possible implementations of the first aspect, and the method in any one of the possible implementations of the second aspect.

According to an eleventh aspect, a communication system is provided. The communication system includes a terminal and a network device, where the terminal is configured to perform the method in any one of the possible implementations of the first aspect, and the network device is configured to perform the method in any one of the possible implementations of the second aspect.

According to a twelfth aspect, a computer-readable storage medium is provided, including a computer program or instructions. When the computer program or the instructions are run on a computer, the computer is enabled to perform the method in any one of the possible implementations of the first aspect to the third aspect.

According to a thirteenth aspect, a computer program product is provided, including a computer program or instructions. When the computer program or the instructions are run on a computer, the computer is enabled to perform the method in any one of the possible implementations of the first aspect to the third aspect.

### BRIEF DESCRIPTION OF DRAWINGS

FIG. 1 is a diagram 1 of a DRX cycle;
FIG. 2 is a diagram 2 of a DRX cycle;
FIG. 3 is a diagram 3 of a DRX cycle;
FIG. 4 is a diagram 4 of a DRX cycle;
FIG. 5 is a diagram of an architecture of a communication system according to an embodiment of this application;
FIG. 6 is a diagram of a structure of a terminal in a communication system according to an embodiment of this application;
FIG. 7 is a schematic flowchart 1 of a communication method according to an embodiment of this application;
FIG. 8 is a diagram 1 of an application scenario of a communication method according to an embodiment of this application;
FIG. 9 is a diagram 2 of an application scenario of a communication method according to an embodiment of this application;
FIG. 10 is a diagram 3 of an application scenario of a communication method according to an embodiment of this application;
FIG. 11 is a diagram 4 of an application scenario of a communication method according to an embodiment of this application;
FIG. 12 is a diagram 5 of an application scenario of a communication method according to an embodiment of this application;
FIG. 13 is a diagram 6 of an application scenario of a communication method according to an embodiment of this application;
FIG. 14 is a diagram 7 of an application scenario of a communication method according to an embodiment of this application;
FIG. 15 is a schematic flowchart 2 of a communication method according to an embodiment of this application;
FIG. 16 is a diagram 1 of a structure of a communication apparatus according to an embodiment of this application; and
FIG. 17 is a diagram 2 of a structure of a communication apparatus according to an embodiment of this application.

### DESCRIPTION OF EMBODIMENTS

For ease of understanding, the following first describes technical terms in embodiments of this application.

### 1. Discontinuous reception (discontinuous reception, DRX):

DRX means that a terminal can periodically monitor a physical downlink control channel (physical downlink control channel, PDCCH) and sleep, to save energy.

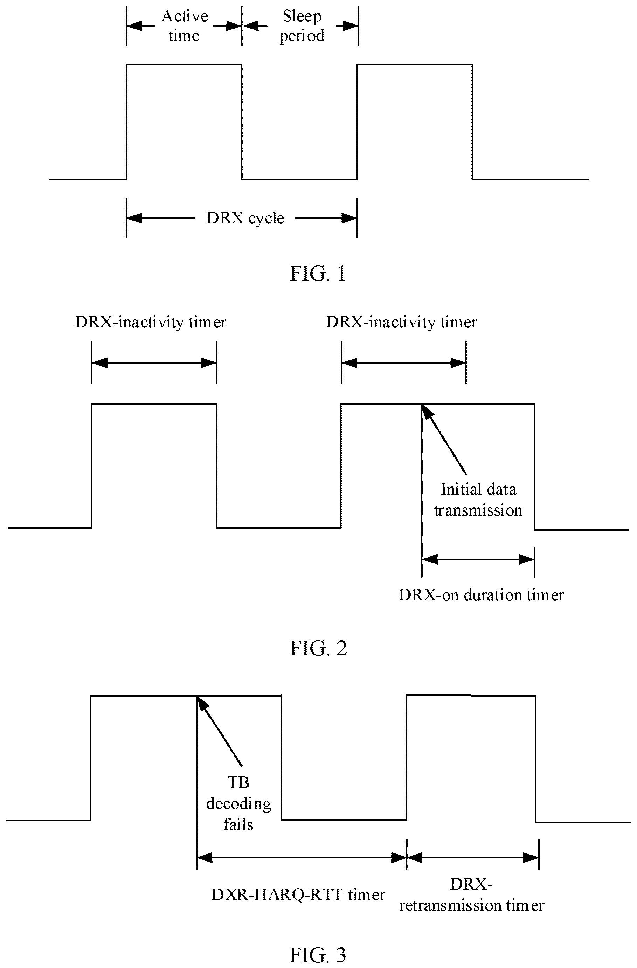

As shown in FIG. 1, in an active time (on duration) of a DRX cycle, the terminal is in a wake-up mode (wake up), and monitors a PDCCH. Then, in a non-active time or a sleep period of the DRX cycle, the terminal enters a sleep mode (sleep mode), and does not monitor the PDCCH, to save energy. Then, in an active time of a next DRX cycle, the terminal is woken up from the sleep mode, and continues to monitor the PDCCH.

As shown in FIG. 2, a DRX mechanism defines a DRX-on duration timer (DRX-on duration timer) and a DRX-inactivity timer (DRX-inactivity timer).

The DRX-on duration timer indicates duration of an active time of a DRX cycle in a normal case, that is, duration of the active time when there is no data transmission in the active time. In other words, when there is data transmission in the active time of the DRX cycle, duration of the active time may be prolonged. The DRX-inactivity timer indicates a time at which the active time ends when there is data transmission in the active time of the DRX cycle.

Specifically, in the active time of the DRX cycle, the DRX-on duration timer runs, and if there is no data transmission, the UE enters a sleep period of the DRX cycle after the timer expires. However, when the terminal is scheduled to receive data or send data for the first time in the active time of the DRX cycle, the terminal may be very likely to receive or send data in a subsequent period of time, for example, several slots (slot). Therefore, when the terminal receives or sends data for the first time (or initial data transmission), the DRX-inactivity timer is started or restarted, so that the terminal monitors the PDCCH in a running time of the DRX-inactivity timer. In other words, when the DRX-inactivity timer runs, even if the DRX-on duration timer expires, the terminal still needs to continue to monitor the PDCCH, and enters the sleep period of the DRX cycle until the DRX-inactivity timer expires.

It may be understood that, when the DRX-inactivity timer is started or restarted, data that originally needs to be transmitted in a plurality of DRX cycles may be centrally transmitted in one DRX cycle. In this way, a data transmission latency can be reduced.

It may be further understood that, although a function of the DRX-inactivity timer is to reduce a data transmission latency, if duration of the DRX-inactivity timer is set to be excessively long, the DRX-inactivity timer may still not expire after data transmission is completed, and the terminal has to continue to monitor the PDCCH, and cannot enter the sleep mode in a timely manner. This is not conducive to energy saving of the terminal. To enable the terminal to enter the sleep mode as soon as possible, a DRX control unit (DRX command) at a medium access control (medium access control, MAC) layer is introduced, which may also be referred to as a Go-To-Sleep CE. For example, when detecting that the terminal has no uplink or downlink data to transmit, a network side sends a protocol data unit (protocol data unit, PDU) at the MAC layer to the terminal, where the PDU may carry the DRX control unit. The terminal may stop the DRX-on duration timer and the DRX-inactivity timer based on the DRX control unit, and enter the sleep mode as soon as possible. As shown in FIG. 3, the DRX mechanism further defines a DXR hybrid automatic repeat request (hybrid automatic repeat request, HARQ) round trip time (round trip time, RTT) timer (DRX-HARQ-RTT-timer) and a DRX-retransmission timer (DRX-retransmission timer). The DXR-HARQ-RTT timer indicates an occasion at which corresponding retransmission may occur when data transmission fails. The DRX-retransmission timer may indicate retransmission.

Specifically, if decoding of a transport block (transport block, TB) of a downlink HARQ process fails, the terminal may assume that retransmission occurs at least after the DXR-HARQ-RTT timer expires. Therefore, when the DXR-HARQ-RTT timer runs, the terminal does not need to monitor a PDCCH, to save energy. After the DXR-HARQ-RTT timer expires, the terminal starts the DRX-retransmission timer for the HARQ process, to indicate a maximum time for the terminal to wait for retransmission. When the DRX-retransmission timer runs, the terminal monitors a PDCCH used for HARQ retransmission.

### 2. DRX long cycle (long cycle) and DRX short cycle (short cycle):

To adapt to different requirements of a terminal for sending data, two scenarios are introduced: a DRX long cycle (briefly referred to as a long cycle) and a DRX short cycle (briefly referred to as a short cycle).

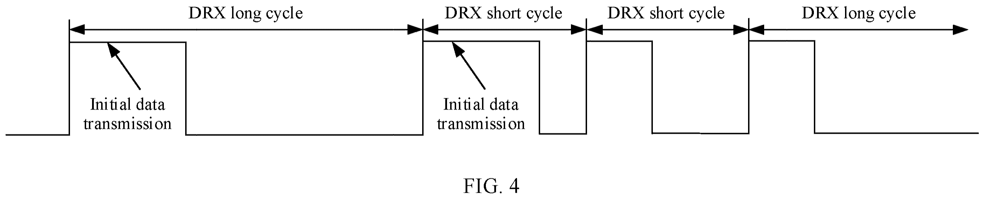

As shown in FIG. 4, the terminal uses the long cycle by default. If a DRX-inactivity timer in the long cycle is triggered, it indicates that there is data to be transmitted and continuous data transmission may occur next. Therefore, after the DRX-inactivity timer in the long cycle expires, the terminal enters a short cycle. Because a sleep period of the short cycle is shorter than that of the long cycle, data transmission can be better performed in the short cycle, to achieve better service latency effect. After a DRX-inactivity timer in the short cycle expires, the terminal starts a DRX-short cycle timer (DRX-short cycle timer). After the DRX-short cycle timer expires, it means that data transmission in the short cycle ends, and the terminal may enter the long cycle, to save power.

### 3. Main radio and secondary radio:

Data receiving and sending of the terminal may be implemented by using a main radio and a secondary radio.

The main radio may be in a wake-up or sleep mode. The main radio does not receive or send data in the sleep mode, that is, does not monitor a PDCCH, to save energy. There may be a plurality of sleep modes of the main radio, which are respectively an ultra-deep sleep (ultra-deep sleep) mode, a light sleep (light sleep) mode, and a micro-sleep (micro-sleep) mode. A difference between different sleep modes mainly lies in a time required for waking up the main radio in different sleep modes, that is, a wake-up time (ramp up) is different. The wake-up time is a time spent on enabling hardware related to the main radio. The wake-up time of the main radio in the ultra-deep sleep mode is greater than the wake-up time of the main radio in the light sleep mode, and the wake-up time of the main radio in the light sleep mode is greater than the wake-up time of the main radio in the micro-sleep mode. After being woken up, the main radio may receive and send data.

The secondary radio may be configured to detect and receive a wake up signal (LP-WUS), to wake up the main radio.

It may be learned that wake-up of the main radio is decoupled from DRX. Currently, how to perform DRX after the main radio is woken up is not defined.

For the foregoing technical problem, embodiments of this application provide the following technical solutions. The following describes the technical solutions in this application with reference to the accompanying drawings.

The technical solutions in embodiments of this application may be applied to various communication systems, for example, a wireless network (Wi-Fi) system, a vehicle to everything (vehicle to everything, V2X) communication system, a device-to-device (device-to-device, D2D) communication system, an Internet of Vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5th generation (5th generation, 5G), for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, common parts of all pieces of information may be further identified and then indicated together, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. Details are not described in this specification. It can be learned from the foregoing description that, for example, when a plurality of pieces of information of a same type need to be indicated, indication manners of different information may be different. In a specific implementation process, a required indication manner may be selected based on a specific requirement. The selected indication manner is not limited in embodiments of this application. In this way, the indication manner in embodiments of this application should be understood as covering various methods that enable a to-be-indicated party to learn of to-be-indicated information.

It should be understood that, the to-be-indicated information may be sent as a whole, or may be divided into a plurality of pieces of sub-information for separate sending. In addition, sending periodicities and/or sending occasions of the sub-information may be the same or different. A specific sending method is not limited in embodiments of this application. The sending periodicities and/or the sending occasions of the sub-information may be predefined, for example, predefined according to a protocol, or may be configured by a transmit end device by sending the configuration information to a receive end device.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated in a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to a protocol family, or a related protocol applied to a future communication system. This is not specifically limited in embodiments of this application.

In embodiments of this application, descriptions such as "when ...", "in a case of ...", and "if' all mean that a device performs corresponding processing in a specific objective situation, and are not intended to limit time. The descriptions do not mean that the device is required to have a determining action during implementation, and do not mean any other limitation.

In descriptions of embodiments of this application, unless otherwise stated, "/" means an "or" relationship between associated objects, for example, A/B may represent A or B. The term "and/or" in embodiments of this application describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of' means two or more. "At least one of the following items (pieces)" or a similar expression thereof means any combination of these items, including any combination of singular items (pieces) or plural items (pieces). For example, at least one of a, b, and c, or at least one of a, b, or c may represent a, b, c, a-b, a-c, b-c, or a-b-c, where a, b, and c may be singular or plural. In addition, for ease of clearly describing the technical solutions in embodiments of this application, in embodiments of this application, words such as "first" and "second" are used to distinguish same items or similar items whose functions and roles are basically the same. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

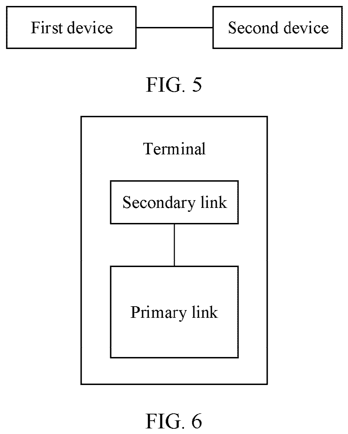

For ease of understanding of embodiments of this application, a communication system to which embodiments of this application are applicable is first described in detail by using a communication system shown in FIG. 5 as an example. For example, FIG. 5 is a diagram of an architecture of a communication system to which a communication method provided in embodiments of this application is applicable.

As shown in FIG. 5, the communication system may include a first device and a second device. For example, in an air interface communication scenario, the first device may be a terminal, and the second device may be a network device. For another example, in a sidelink communication scenario, both the first device and the second device may be terminals.

Specifically, the terminal may be a terminal having receiving and sending functions. The terminal may also be referred to as a user apparatus (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a pad (Pad), a wireless data card, a personal digital assistant (personal digital assistant, PDA) computer, a wireless modem (modem), a handset (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a road side unit (road side unit, RSU) having a terminal function, or the like. The terminal in this application may alternatively be a vehicle-mounted module, a vehicle-mounted assembly, a vehicle-mounted component, a vehicle-mounted chip, or a vehicle-mounted unit that is built in a vehicle as one or more components or units.

As shown in FIG. 6, the terminal may include a main radio and a secondary radio.

The main radio mainly has two modes, for example, a sleep mode and a working mode. After the main radio enters the sleep mode, the main radio does not monitor a PDCCH, and does not receive or send data. There may be a plurality of sleep modes of the main radio. For example, the plurality of sleep modes may include a micro-sleep mode, a light sleep mode, and an ultra-deep sleep mode. Duration required for waking up the main radio in the micro-sleep mode is usually 0 milliseconds (ms), or approaches 0 milliseconds. In other words, the main radio may be immediately woken up in the micro-sleep mode. Duration required for waking up the main radio in the light sleep mode is very short, for example, 3 ms. In other words, the main radio may be woken up quickly in the light-micro sleep mode. Duration required for waking up the main radio in the light sleep mode is relatively long, for example, 400 ms. In other words, it takes a particular time to wake up the main radio in the ultra-micro sleep mode.

It may be understood that, that it takes a particular time to wake up the main radio in the sleep mode means that it takes a particular time to enable hardware of the main radio. In other words, for different sleep modes, degrees of disabling the hardware of the main radio are different. A deeper sleep indicates a larger quantity of pieces of disabled hardware of the main radio, and being more energy-saving. Correspondingly, duration required for enabling the hardware is also longer. This means that duration required for being woken up is also longer.

It may be further understood that the main radio may also be replaced with any other possible name, for example, a first radio, a main transceiver radio, or a main communication radio. This is not specifically limited herein. Therefore, in this embodiment of this application, that the main radio enters the sleep mode may also be understood as that the first radio, the main transceiver radio, the main communication radio, or the like enters the sleep mode.

The secondary radio is mainly configured to monitor a signal for waking up the main radio. Therefore, after detecting the signal, the secondary radio may trigger wake-up of the main radio. The secondary radio may also be replaced with any other possible name, for example, a second radio, a secondary transceiver radio, or a secondary communication radio. This is not specifically limited herein.

The network device may be an access network device, or may be referred to as a radio access network (radio access network, RAN) device. The RAN device may be a device that provides access for a terminal device. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may further include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU) or a distributed unit (distributed unit, DU), an RSU having a base station function, a wired access gateway, or a 5G core network. Alternatively, the RAN device may further include an access point (access point, AP), a wireless relay node, a wireless backhaul node, macro base stations in various forms, a micro base station (also referred to as a small cell), a relay station, an access point, a wearable device, an in-vehicle device, and the like in a wireless fidelity (wireless fidelity, Wi-Fi) system. Alternatively, the network device may be any other possible core network element. This is not specifically limited herein.

For ease of understanding, the following is described by using an example in which the first device is a terminal and the second device is a network device. For a case in which both the first device and the second device are terminals, refer to the example for understanding. Details are not described again.

In the communication system, the network device may send first indication information to the terminal based on service requirements of different services. The first indication information may indicate the first indication information indicates the main radio of the terminal to enter a first sleep mode, and duration required for waking up the main radio in the first sleep mode matches a service requirement of the terminal. In this way, even if the main radio of the terminal is woken up in the first sleep mode, subsequent data transmission of the terminal can still meet a service requirement of the terminal.

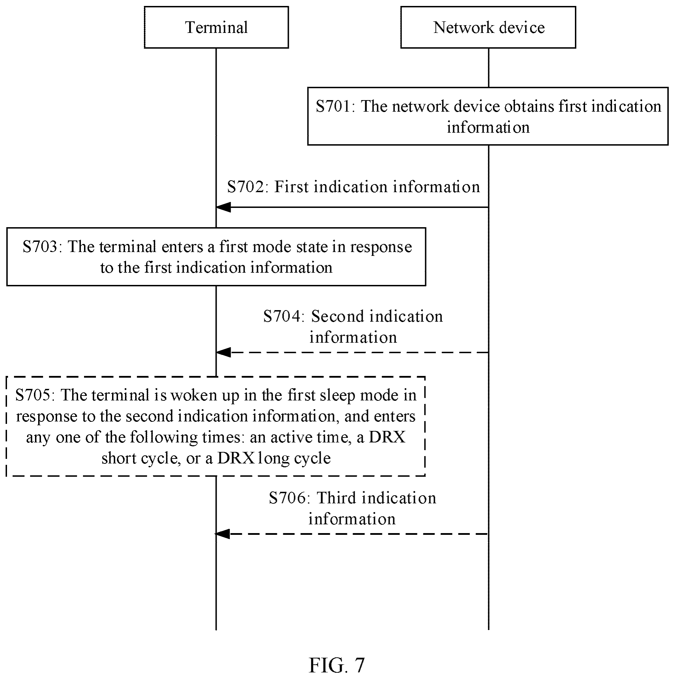

With reference to FIG. 7 to FIG. 15, the following specifically describes a procedure of interaction between the devices in the foregoing communication system by using method embodiments. The communication method provided in embodiments of this application is applicable to the foregoing communication system, and is specifically applied to various scenarios mentioned in the foregoing communication system. The following provides specific descriptions.

FIG. 7 is a schematic flowchart 1 of a communication method according to an embodiment of this application. The communication method is applicable to the foregoing communication system, and relates to interaction between a terminal and a network device. The communication method may be performed by the terminal and the network device, or may be performed by a chip or a chip system in the terminal or the network device. The following is described by using an example in which the communication method is performed by the terminal and the network device.

Specifically, as shown in FIG. 7, a procedure of the communication method is as follows.

S701: The network device obtains first indication information.

The first indication information may indicate the terminal to enter a first sleep mode.

The first sleep mode may be a sleep mode in a plurality of sleep modes of the terminal, and duration required for waking up the terminal in the plurality of sleep modes is different from each other. For example, the plurality of sleep modes may include the foregoing micro-sleep mode, light sleep mode, and ultra-deep sleep mode. For a specific implementation principle, refer to the foregoing related descriptions, and details are not described herein again. Alternatively, in a future communication system, the plurality of sleep modes may be defined in another manner. For example, more than three or more sleep modes are defined. This is not limited in this embodiment of this application. That the terminal enters the first sleep mode may mean that a main radio of the terminal enters the first sleep mode. For a specific implementation principle of the main radio, refer to the foregoing related descriptions. Details are not described herein again. In addition, unless otherwise specified below, that the terminal enters the first sleep mode mentioned below means that the main radio of the terminal enters the first sleep mode.

The first indication information may be indicated in a plurality of manners. For example, the first indication information may be 2-bit (bit) information, "00" indicates that the terminal enters the micro-sleep mode, "01" indicates that the terminal enters the light sleep mode, and "10" indicates that the terminal enters the ultra-deep sleep mode. For another example, the first indication information may be a character string, "micro-sleep" indicates that the terminal enters the micro-sleep mode, "light sleep" indicates that the terminal enters the light sleep mode, and "ultra-deep sleep" indicates that the terminal enters the ultra-deep sleep mode. For still another example, the first indication information may be of an enumerated type, and different padding values represent that the terminal enters different sleep modes. Certainly, the foregoing indication manners of the first indication information are merely examples. An implementation of a specific indication manner of the first indication information is not limited in this embodiment of this application.

The network device may determine, based on a service requirement of the terminal, a sleep mode that the terminal needs to enter, for example, the first sleep mode.

The service requirement of the terminal may be represented by a quality of service (quality of service, QoS) class identifier (QoS class identifier, QCI) of the terminal. For example, the QCI may indicate a QoS requirement of a service of the terminal, such as a resource type, a priority, a latency, and a packet loss rate, that is, the service requirement of the terminal. A same QoS requirement is represented by a same QCI, and different QoS requirements may be represented by different QCIs. A QCI may be transmitted between network elements to avoid high overheads caused by transmission of a specific QoS requirement.

The network device may determine, based on the service requirement of the terminal, a sleep mode that matches the service requirement of the terminal, namely, the first sleep mode. In other words, duration required for waking up the terminal in the first sleep mode matches the service requirement of the terminal. For example, the QCI indicates that a service of the terminal has a high latency requirement, and the service is a latency-sensitive service or an ultra-low latency service. The network device determines that the first sleep mode is the micro-sleep mode. To be specific, the terminal may be immediately woken up in the micro-sleep mode, to meet the latency requirement of the latency-sensitive service. For another example, the QCI indicates that the service of the terminal has a general latency requirement, and the service is a low-latency service. The network device determines that the first sleep mode is the light sleep mode. To be specific, the terminal may be quickly woken up in the light sleep mode, to meet the latency requirement of the low-latency service. For still another example, the QCI indicates that the service of the terminal has a relatively loose latency requirement, and the service is a latency-insensitive service such as a meter reading service. The network device determines that the first sleep mode is the ultra-deep sleep mode. Then, when the terminal needs to enter the first sleep mode, the network device may generate the first indication information. For example, if the network device determines that data transmission of the terminal is completed, and there may be no data transmission in a short time, the network device determines that the terminal needs to enter the first sleep mode, to generate the first indication information. Certainly, if the network device has generated the first indication information in advance, and caches or locally stored the first indication information, the network device may alternatively directly obtain the first indication information locally.

S702: The network device sends the first indication information to the terminal. Correspondingly, the terminal receives the first indication information.

In a first possible design solution, the network device may send the first indication information to the terminal in an active time (on duration) of a DRX cycle of the terminal. Correspondingly, the terminal may receive the first indication information in the active time of the DRX cycle. To be specific, even if the terminal is in the active time of the DRX cycle, the terminal can immediately enter the first sleep mode based on the first indication information, to save energy. The DRX cycle may be an existing DRX cycle, or a newly defined DRX cycle in this embodiment of this application, for example, a newly defined DRX short cycle, or a newly defined DRX long cycle. For details, refer to related descriptions of the following S705. Details are not described herein again. In addition, the DRX cycle mentioned in this embodiment of this application may be understood as an existing DRX cycle or a newly defined DRX cycle in this embodiment of this application unless otherwise specified.

Optionally, in response to the first indication information, the terminal may further disable at least one timer configured in the active time of the DRX cycle. The at least one timer may include: a DRX-inactivity timer (DRX-inactivity timer) and a DRX-on duration timer (DRX-on duration timer), used to enable the terminal to enter the first sleep mode. In addition, for specific implementation principles of the DRX-inactivity timer and the DRX-on duration timer, refer to the foregoing related descriptions. Details are not described herein again.

The first indication information may explicitly or implicitly indicate the terminal to disable the at least one timer. For example, the first indication information may include a newly defined information element, for example, additional bit information, a character string, or a padding value, to indicate the terminal to disable the at least one timer. For a specific indication manner, refer to the foregoing related descriptions. Details are not described herein again. Alternatively, the first indication information may carry an existing information element, for example, a MAC PDU, to indicate the terminal to disable the at least one timer. For a specific implementation principle of the MAC PDU, refer to the foregoing related descriptions. Details are not described herein again. Alternatively, when receiving the first indication information, the terminal may disable the at least one timer by default.

In a second possible design solution, the network device may send the first indication information to the terminal in a non-active time of the DRX cycle of the terminal. Correspondingly, the terminal may receive the first indication information in the non-active time of the DRX cycle of the terminal. In the non-active time of the DRX cycle of the terminal, the terminal may be in any possible sleep mode in the foregoing plurality of sleep modes. A specific sleep mode in which the terminal may be in the non-active time of the terminal is not limited in this embodiment of this application. Therefore, although the terminal has entered a sleep mode in the non-active time of the DRX cycle, the terminal may still enter, based on the first indication information, the first sleep mode that matches the service requirement of the terminal.

It may be understood that the active time and the non-active time of the DRX cycle of the terminal that are mentioned in this embodiment of this application are two concepts different from the first sleep mode of the terminal. The active time and the non-active time of the DRX cycle of the terminal are usually concepts of a time dimension, that is, the active time and the non-active time are different periods of time in the DRX cycle. The first sleep mode of the terminal is a concept of a device dimension. To be specific, the first sleep mode of the terminal is a state in which the terminal may be in a sleep mode in a period of time (for example, the non-active time).

It may be further understood that an occasion on which the network device sends the first indication information to the terminal may depend on an occasion that is determined by the network device and on which the terminal enters the first sleep mode. In other words, if the network device determines to enable the terminal to enter the first sleep mode in the active time of the DRX cycle of the terminal, the network device sends the first indication information to the terminal in the active time; and otherwise, if the network device determines to enable the terminal to enter the first sleep mode in the non-active time of the DRX cycle of the terminal, the network device sends the first indication information to the terminal in the non-active time.

In a third possible design solution, the network device may send the first indication information to the terminal when the terminal is in a second sleep mode. Correspondingly, the terminal may receive the first indication information in the second sleep mode. The second sleep mode is a sleep mode that is different from the first sleep mode and that is in the plurality of sleep modes, so that flexible switching between the sleep modes is implemented. In other words, if the network device determines that a current service of the terminal has a lower requirement for wake-up duration, the network device may indicate the terminal to enter a sleep mode with longer wake-up duration, to save more energy. On the contrary, if the network device determines that the current service of the terminal has a higher requirement for the wake-up duration, the network device may indicate the terminal to enter a sleep mode with shorter wake-up duration, to meet a service requirement.

It may be understood that, a difference between the foregoing three possible design solutions lies in that, for the first possible design solution and the second possible design solution, the network device may not sense a specific sleep mode of the terminal before the terminal enters the first sleep mode, and may not sense whether the terminal is specifically in the active time or the non-active time of the DRX cycle of the terminal, but the occasion that is determined by the network device and on which the first indication information is sent is exactly in the active time or the non-active time. For the third possible design solution, the network device needs to sense a change of the sleep mode of the terminal, to meet the service requirement in real time.

The first indication information may be carried in existing signaling, for example, a system message. Alternatively, the first indication information may be carried in newly defined signaling. This is not limited.

S703: The terminal enters the first sleep mode in response to the first indication information.

After the main radio of the terminal enters the first sleep mode, a secondary radio of the terminal may be in a working mode, to monitor a signal for waking up the main radio, to ensure that the main radio can be woken up in a timely manner subsequently.

It may be understood that when S703 is performed by the chip or the chip system in the terminal, the chip or the chip system triggers the terminal to enter the first sleep mode.

For ease of understanding, the following is described by using an example.

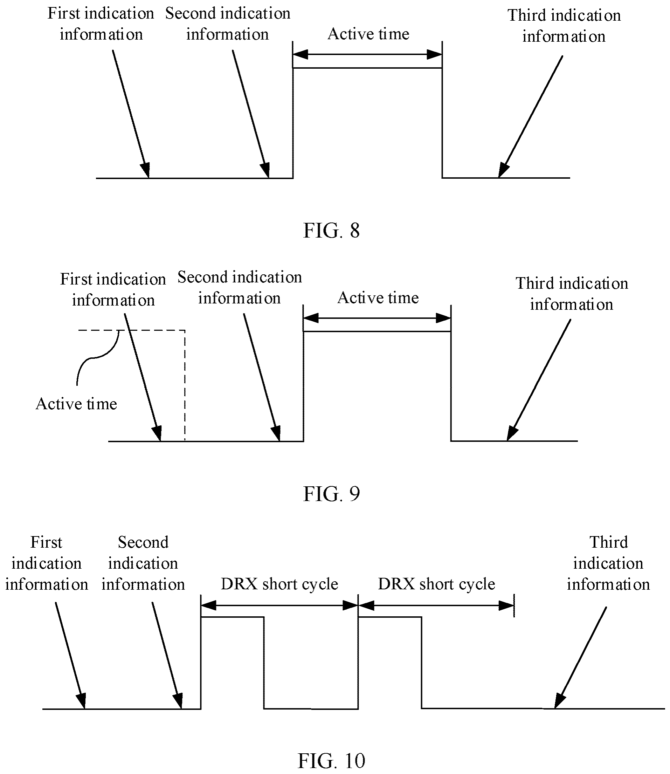

As shown in FIG. 8 to FIG. 10, before a moment t1, the UE is in the non-active time of the existing DRX cycle. At the moment t1, a RAN device sends the first indication information to the UE, and the UE enters the first sleep mode at the moment t1. A period of time after the UE enters the first sleep mode may be understood as a non-active time.

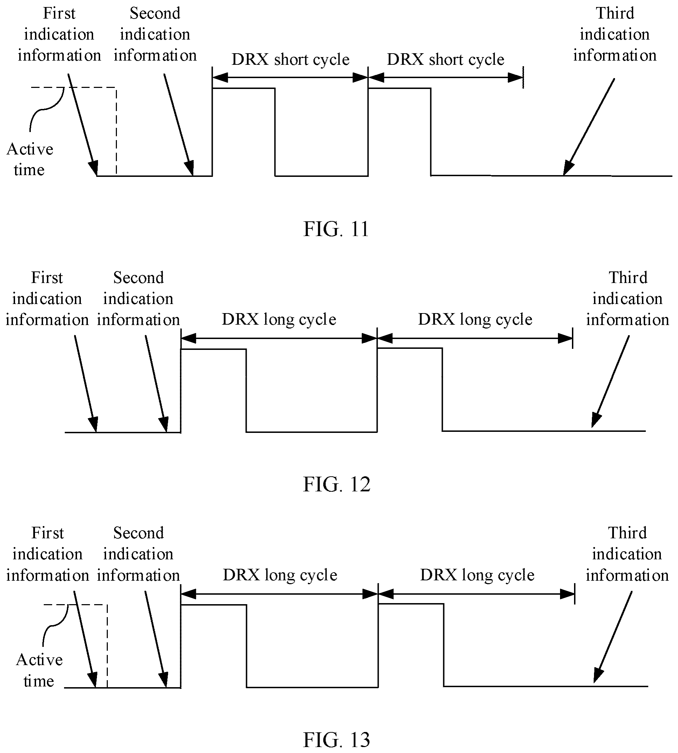

Alternatively, as shown in FIG. 11 to FIG. 13, before the moment t1, the UE is in the active time of the existing DRX cycle. At the moment t1, the RAN device sends the first indication information to the UE, and the UE enters the first sleep mode at the moment t1. In addition, at the moment t1, the UE ends the active time of the existing DRX cycle, disables the existing DRX-inactivity timer and/or the existing DRX-on duration timer, and enters a non-active time.

In conclusion, the network device may send the first indication information to the terminal based on service requirements of different services, to indicate the terminal to enter the first sleep mode whose wake-up duration matches a service requirement of the terminal, so that even if the terminal is woken up in the first sleep mode, subsequent data transmission of the terminal can still meet the service requirement of the terminal.

In a possible design solution, with reference to S701 to S703, the communication method further includes:
S704: The network device sends second indication information to the terminal. The terminal receives the second indication information.

The second indication information may indicate that the terminal needs to be woken up.

In a possible implementation, the second indication information may be a low power wake up signal (low power wake up signal, LP-WUS), that is, implemented by reusing existing signaling. The LP-WUS does not distinguish a specific sleep mode in which the terminal is woken up. In other words, regardless of which sleep mode the terminal is in, the terminal may be woken up after receiving the LP-WUS.

In another possible implementation, the second indication information may alternatively be newly defined signaling. For example, second indication information of different functions is defined based on different sleep modes of the terminal. The second indication information of each function may indicate the terminal to be woken up from a sleep mode corresponding to the second indication information. To be specific, the second indication information of each function usually cannot indicate the terminal to be woken up from a sleep mode other than a sleep mode corresponding to the second indication information. For example, the second indication information #1 may indicate the terminal to be woken up from the micro-sleep mode, the second indication information #2 may indicate the terminal to be woken up from the light sleep mode, and the second indication information #3 may indicate the terminal to be woken up from the ultra-deep sleep mode. In this case, the second indication information #1 cannot indicate the terminal to be woken up from the light sleep mode or the ultra-deep sleep mode. The second indication information of other functions is similar, and details are not described herein again. Therefore, the network device may send, to the terminal based on that the terminal enters the first sleep mode, the second indication information whose function is indicating the terminal to be woken up from the first sleep mode.

In this embodiment of this application, the network device may determine, based on an occasion on which the terminal needs to receive and send service data, an occasion on which the terminal is woken up. For example, the network device learns that the terminal may need to receive and send the service data after a first time, so that the network device can determine that a time at which the terminal is woken up is the first time, or a time at which the terminal is woken up in the first sleep mode is the first time.

Specifically, when an air interface transmission delay between the network device and the terminal is not considered:
If the first sleep mode is the micro-sleep mode, a time at which the network device sends the second indication information to the terminal may also be the first time. Correspondingly, a time at which the terminal receives the second indication information may also be the first time, that is, the terminal may be immediately woken up to receive and send data in a timely manner.

If the first sleep mode is the light sleep mode, a time at which the network device sends the second indication information to the terminal may be a second time before the first time. Correspondingly, a time at which the terminal receives the second indication information may also be the second time before the first time. In this case, a time difference (for example, 3 ms) between the first time and the second time is duration required for waking up the terminal in the light sleep mode.

If the first sleep mode is the ultra-deep sleep mode, a time at which the network device sends the second indication information to the terminal may be a third time before the first time. Correspondingly, a time at which the terminal receives the second indication information may also be a third time before the first time. In this case, a time difference (for example, 400 ms) between the first time and the third time is duration required for waking up the terminal in the ultra-deep sleep mode, and the time difference between the first time and the third time is greater than the time difference between the first time and the second time. To be specific, a time required for waking up the terminal in the ultra-deep sleep mode is longer than a time required for waking up the terminal in the light sleep mode, and an occasion on which the second indication information is sent needs to be earlier.

It can be learned that, for the light sleep mode and the ultra-deep sleep mode, the network device needs to wake up the terminal in advance, to ensure that the terminal can receive and send data on a proper occasion subsequently, and avoid an increase in communication overheads caused by retransmission due to missing of receiving and sending data.

Certainly, if the air interface transmission delay between the network device and the terminal needs to be considered, a time at which the network device sends the second indication information may be advanced by a time required for air interface transmission relative to each foregoing time.

For the terminal, because the main radio of the terminal has been in the first sleep mode, and cannot receive or send data, the terminal may receive the second indication information by using the secondary radio. Therefore, unless otherwise specified, receiving the second indication information by the terminal mentioned in this embodiment of this application means receiving the second indication information by the secondary radio of the terminal.

For ease of understanding, the following continues to describe the foregoing examples.

As shown in FIG. 8 or FIG. 11, the UE is in the micro-sleep mode. If the UE may receive or send data after a moment t2, the RAN device sends the second indication information to the UE at the moment t2. Correspondingly, the UE receives the second indication information at the moment t2, and is immediately woken up.

Alternatively, as shown in FIG. 9 or FIG. 12, the UE is in the light sleep mode. If the UE may receive or send data after the moment t2, the RAN device sends the second indication information to the UE at a moment t3 that is 3 ms earlier than the moment t2. Correspondingly, the UE receives the second indication information at the moment t3, and is woken up at the moment t2.

Alternatively, as shown in FIG. 10 or FIG. 13, the UE is in the ultra-deep sleep mode. If the UE may receive or send data after the moment t2, the RAN device sends the second indication information to the UE at a moment t4 that is 400 ms earlier than the moment t2. Correspondingly, the UE receives the second indication information at the moment t4, and is woken up at the moment t2.

S705: The terminal is woken up in the first sleep mode in response to the second indication information, and enters any one of the following times: an active time, a DRX short cycle, or a DRX long cycle.

Because the main radio of the terminal has been in the first sleep mode, after receiving the second indication information, the secondary radio of the terminal may trigger wake-up of the main radio of the terminal in response to an indication of the second indication information. In other words, the main radio of the terminal is woken up by the secondary radio of the terminal in the first sleep mode. It may be understood that, unless otherwise specified, that the terminal is woken up in the first sleep mode mentioned in this embodiment of this application means that the main radio of the terminal is woken up by the secondary radio of the terminal in the first sleep mode.

The active time may be a newly defined active time, and is denoted as a new active time. Duration of the new active time may still be duration of the active time of the existing DRX cycle, or may be flexibly configured based on a service requirement of the terminal. For example, the second indication information may further carry information representing the duration of the new active time, to indicate the duration of the new active time, or the duration of the new active time may be predefined by using a protocol. This is not specifically limited. Certainly, the new active time may also directly reuse the active time of the existing DRX cycle.

For the terminal, if the first sleep mode is the micro-sleep mode, the terminal may enter the new active time. In this case, the terminal may receive and send data in a timely manner in the new active time without waiting for the non-active time, thereby reducing a data transmission latency. Then, after the new active time expires, the terminal may enter the non-active time by default, where duration of the non-active time may be not limited. In other words, in the non-active time, if the network device does not indicate the terminal to enter the new active time, the DRX short cycle, or the DRX long cycle, the terminal may continuously retain in the non-active time. In addition, the terminal may be in any one of the plurality of sleep modes in the non-active time. This is not limited in this embodiment of this application.

For ease of understanding, the following continues to describe the foregoing examples.

As shown in FIG. 8 or FIG. 11, the UE is in the micro-sleep mode. After the UE receives the second indication information at the moment t2, the UE may be immediately woken up at the moment t2, and enter new active time. Then, the new active time expires, and the UE enters the non-active time.

The foregoing DRX short cycle may be a newly defined DRX short cycle, and is denoted as a new DRX short cycle. Duration of the new DRX short cycle may be flexibly configured by the network device based on a service requirement. For example, the second indication information may further indicate the duration of the new DRX short cycle, for example, include information indicating duration of the active time and the non-active time of the new DRX short cycle. Alternatively, the duration of the new DRX short cycle may be predefined in a protocol.

The second indication information may further indicate at least one of the following: whether to zero out an existing count of the DRX short cycle (for example, the existing DRX short cycle), whether to reuse the count of the DRX short cycle (for example, the existing DRX short cycle), or a quantity of DRX short cycles (new DRX short cycles). To be specific, a quantity of the DRX short cycles and a counting manner can be flexibly indicated, to meet an actual requirement.

Specifically, a quantity of the new DRX short cycles may be flexibly configured by the network device based on a service requirement. For example, the second indication information may further indicate the quantity of the new DRX short cycles, for example, carry information representing the quantity of the new DRX short cycles. Optionally, the second indication information may further indicate not to reuse the existing count of the existing DRX short cycle. For example, a 1-bit information element is included, to indicate, by using a value of 0 or 1, not to reuse the count of the existing DRX short cycle. Alternatively, if the second indication information does not indicate, the terminal may alternatively not reuse the count of the existing DRX short cycle by default. Therefore, the terminal may configure a DRX-short cycle timer for the new DRX short cycle based on the indication of the second indication information, where the DRX-short cycle timer is denoted as a new DRX-short cycle timer. The new DRX-short cycle timer may count based on the quantity of the new DRX short cycles. For example, if the quantity of the new DRX short cycles is 5, a count of the new DRX-short cycle timer is 5, indicating that the terminal may execute five new DRX short cycles after being woken up. Certainly, the quantity of the new DRX short cycles may alternatively be predefined in a protocol.

If the second indication information does not indicate the quantity of the new DRX short cycles, or the quantity of the new DRX short cycles is not defined in a protocol, the terminal may alternatively still use the quantity of the existing DRX short cycles as the quantity of the new DRX short cycles, and still use the DRX-short cycle timer of the existing DRX short cycle, which is denoted as an existing DRX-short cycle timer. For example, the second indication information may indicate to reuse the existing count of the existing DRX short cycle. For example, a 1-bit information element is included, to indicate, by using another value of 0 or 1, to reuse the count of the existing DRX short cycle. To be specific, the existing DRX-short cycle timer is used as an execution quantity of the new DRX short cycles for counting.

Optionally, when the existing DRX-short cycle timer is reused, the second indication information may further indicate whether to zero out the existing count of the existing DRX short cycle. For example, a 1-bit information element is further included, to indicate, by using a value of 0 or 1, whether to zero out the existing count of the existing DRX short cycle, or when the second indication information does not indicate, the terminal may alternatively zero out or not zero out the existing count of the existing DRX short cycle by default, or whether the terminal zeros out the existing count of the existing DRX short cycle may alternatively be predefined in a protocol. For example, if the quantity of the existing DRX short cycles is 3, it indicates that after executing three existing DRX short cycles, the terminal switches to execute a DRX long cycle and a DRX short cycle. When the existing count of the existing DRX short cycle is 1, if the existing count of the existing DRX short cycle is not zeroed out, the count of the existing DRX-short cycle timer may be counted from 1 to 3, indicating that the terminal may execute two new DRX short cycles after being woken up, and then switch to execute the DRX long cycle and the DRX short cycle; or if the existing count of the existing DRX short cycle is zeroed out, the count of the existing DRX-short cycle timer may be counted from 0 to 3, indicating that the terminal may execute three new DRX short cycles after being woken up, and then switch to execute the DRX long cycle and the DRX short cycle.

For the terminal, if the first sleep mode is the light sleep mode, the terminal may enter the new DRX short cycle. In the new DRX short cycle, a data transmission latency is relatively low, and the terminal is relatively energy-saving, to consider both the data transmission latency and terminal energy-saving. Certainly, the DRX short cycle referred to in any one of the foregoing times may alternatively be the existing DRX short cycle. To be specific, after being woken up from the first sleep mode, the terminal may alternatively enter the existing DRX short cycle. Details are not described herein again. Then, after the new DRX short cycle or the existing DRX short cycle expires, the terminal may enter the non-active time by default, and duration of the non-active time and a sleep mode in which the terminal is in the non-active time may not be limited.

For ease of understanding, the following continues to describe the foregoing examples.

As shown in FIG. 9 or FIG. 12, the UE is in the light sleep mode. After the UE receives the second indication information at the moment t3, the UE may be woken up at the moment t2 after duration of 3 ms to 6 ms, and enter several DRX short cycles. Then, the DRX short cycles expire, and the UE enters the non-active time.

The foregoing DRX long cycle may be a newly defined DRX long cycle, and is denoted as a new DRX long cycle. Duration of the new DRX long cycle may be flexibly configured by the network device based on a service requirement. For example, the second indication information may further indicate the duration of the new DRX long cycle, for example, include information indicating duration of the active time and the non-active time of the new DRX long cycle. Alternatively, the duration of the new DRX long cycle may be predefined in a protocol.

The second indication information may further indicate a quantity of new DRX long cycles, that is, flexibly indicate the quantity of the DRX long cycles, to meet an actual requirement. For example, the second indication information may include information representing the quantity of the new DRX long cycles. The terminal may configure a DRX-long cycle timer for the new DRX long cycle based on the indication of the second indication information, where the DRX-long cycle timer is denoted as a new DRX-long cycle timer. The new DRX-long cycle timer may count based on the quantity of the new DRX long cycles. For example, if the quantity of the new DRX long cycles is 3, a count of the new DRX-long cycle timer is 3, indicating that the terminal may execute three new DRX long cycles after being woken up. Certainly, the quantity of the new DRX long cycles may alternatively be predefined in a protocol.

For the terminal, if the first sleep mode is the ultra-deep sleep mode, the terminal enters the new DRX long cycle. Because a time of the non-active time of the new DRX long cycle is relatively long, the terminal can save more energy. Certainly, the DRX long cycle referred to in any one of the foregoing times in this embodiment of this application may alternatively be the existing DRX long cycle. To be specific, after being woken up from the first sleep mode, the terminal may alternatively enter the existing DRX long cycle. Details are not described herein again. Then, after the new DRX long cycle or the existing DRX long cycle expires, the terminal may enter the non-active time by default, and duration of the non-active time and a sleep mode in which the terminal is in the non-active time may not be limited.

For ease of understanding, the following continues to describe the foregoing examples.

As shown in FIG. 10 or FIG. 13, the UE is in the ultra-deep sleep mode. After the UE receives the second indication information at the moment t4, the UE may be woken up at the moment t2 after duration of 400 ms, and enter several DRX long cycles. Then, the DRX long cycles expire, and the UE enters the non-active time.

It may be understood that, for the non-active time of the new DRX short cycle or the non-active time of the new DRX long cycle, the terminal may also be in any one of the plurality of sleep modes in the non-active time. This is not specifically limited in this embodiment of this application.

It may be further understood that the foregoing implementation is merely an example, and is not used as a limitation. For example, the second indication information may also directly indicate the terminal whether to enter the active time, the DRX short cycle, or the DRX long cycle after being woken up.

In a possible design solution, with reference to S704 and S705, the communication method further includes:
S706: The network device sends third indication information to the terminal, and the terminal receives the third indication information.

The third indication information may be used to wake up the terminal, for example, indicate the terminal to enter any one of the following times, such as the active time, the DRX short cycle, or the DRX long cycle. In this case, a function of the third indication information is similar to that of the second indication information. Reference may be made for understanding. Details are not described herein again. Alternatively, the third indication information may be used to trigger the terminal to enter sleep, for example, indicate the terminal to enter a sleep mode in the plurality of sleep modes. In this case, a function of the third indication information is similar to that of the first indication information. Reference may be made for understanding. Details are not described herein again.

The network device may send the third indication information to the terminal in any time in S705. A specific sending occasion of the third indication information may be determined by the network device based on the service requirement of the terminal. For example, in a process of the DRX short cycle, if the network device determines, based on a change of the service requirement, that a service of the terminal is no longer sensitive to a latency, the network device sends the third indication information to the terminal, to indicate the terminal to enter the DRX long cycle. For another example, in the process of the DRX short cycle, if the network device determines, based on the change of the service requirement, that the service of the terminal is more sensitive to the latency, the network device sends the third indication information to the terminal, to indicate the terminal to enter the active time. Alternatively, the network device may send the third indication information to the terminal after any time in S705 expires, that is, after the terminal enters the non-active time.

For ease of understanding, the following continues to describe the foregoing examples.

As shown in FIG. 8 to FIG. 13, after the UE enters the non-active time, the UE may receive, at a moment t5, the third indication information from the RAN device, to restore to the first sleep mode or enter the existing DRX cycle.

In a possible design solution, with reference to S701 to S706, in this communication method, the secondary radio of the terminal is configured to monitor, in at least a partial time of the non-active time of the DRX cycle (the existing DRX cycle or the new DRX cycle, which is not limited) and on a preset bandwidth part (bandwidth part, BWP), indication information used to wake up the main radio of the terminal, for example, the second indication information or the third indication information (for a case of waking up the terminal).

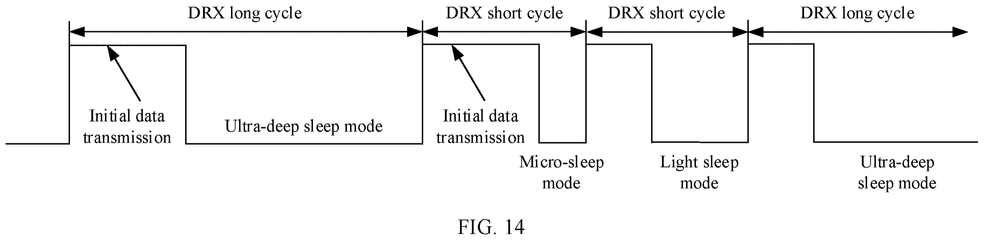

As shown in FIG. 14, if the at least partial time is a partial time of the non-active time of the DRX cycle, that is, a partial non-active time, it indicates that the secondary radio of the terminal can be enabled only in the partial time, to save energy. If the at least partial time is the whole time of the non-active time of the DRX cycle, that is, the entire non-active time, it indicates that the secondary radio of the terminal can be enabled in the entire non-active time.

The at least partial time may be a time predefined in a protocol and/or a time preconfigured by the network device. For example, the time predefined in the protocol is the whole time of the non-active time of the DRX cycle, and the time preconfigured by the network device is a partial time of the non-active time of the DRX cycle. Before the network device configures the time, the terminal may control, by default, enabling and disabling of the secondary radio of the terminal based on the time predefined in the protocol. To be specific, in this case, the secondary radio needs to be enabled in the entire non-active time, to monitor indication information used to wake up the main radio of the terminal. If the terminal receives the time configured by the network device, the terminal may control enabling and disabling of the secondary radio of the terminal based on the time configured by the network device. To be specific, in this case, the secondary radio is enabled only in a partial time of the non-active time, to monitor the indication information used to wake up the main radio of the terminal.

The bandwidth part may be a bandwidth configured for the secondary radio of the terminal to use in the at least partial time of the non-active time of the DRX cycle. If the at least partial time is a partial time of the non-active time of the DRX cycle, it indicates that the secondary radio of the terminal can use the bandwidth part only in the partial time, or the bandwidth part may be valid only in the partial time for the secondary radio. For another time, the secondary radio of the terminal usually cannot use the bandwidth part, but the bandwidth part may be used to implement another function. If the at least partial time is the whole time of the non-active time of the DRX cycle, it indicates that regardless of whether the secondary radio of the terminal is enabled in the non-active time, the bandwidth part is a bandwidth part that can be used by the secondary radio. In other words, even if the secondary radio is not enabled, the bandwidth part may also be used to implement another function.

The bandwidth part may be a bandwidth part predefined in a protocol and/or a bandwidth part preconfigured by the network device. For example, the bandwidth part predefined in the protocol is a bandwidth part configured for the terminal to use in the whole time of the non-active time of the DRX cycle, and the bandwidth part preconfigured by the network device is a bandwidth part configured for the terminal to use in the partial time of the non-active time of the DRX cycle. Before the network device configures the bandwidth part, the terminal may use, by default, the bandwidth part predefined in the protocol. If the terminal receives the bandwidth part configured by the network device, the terminal may use the bandwidth part configured by the network device.

It may be understood that the at least partial time when the secondary radio of the terminal is enabled and the at least partial time when the secondary radio of the terminal uses the bandwidth part may be two independent times. If the secondary radio of the terminal is configured to be enabled in the partial time of the non-active time, and the bandwidth part is valid only in a partial time for the secondary radio, the time when the bandwidth part is valid should overlap the time when the secondary radio of the terminal is enabled, to ensure that when the secondary radio of the terminal is enabled, the secondary radio can have an available bandwidth part. For example, the time when the bandwidth part is valid is the entire non-active time, that is, the bandwidth part is valid in the entire non-active time. However, the secondary radio of the terminal can be enabled only in the partial time of the non-active time.

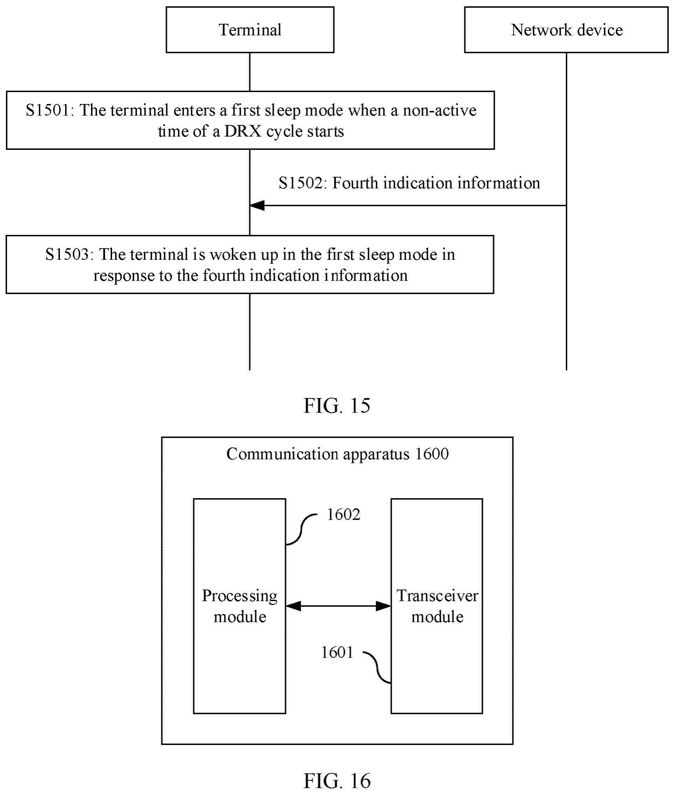

FIG. 15 is a schematic flowchart 2 of a communication method according to an embodiment of this application. The communication method is applicable to the foregoing communication system, and relates to interaction between a terminal and a network device.

As shown in FIG. 15, a procedure of the communication method is as follows.

S1501: The terminal enters a first sleep mode when a non-active time of a DRX cycle starts.

The first sleep mode is a sleep mode that corresponds to duration of the DRX cycle and that is in a plurality of sleep modes, and duration required for waking up the terminal in the plurality of sleep modes is different from each other. For example, the first sleep mode may be any one of a micro-sleep mode, a light sleep mode, and an ultra-deep sleep mode. Duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

In a possible manner, the terminal may determine, based on the duration of the DRX cycle, a specific sleep mode to be entered. For example, if the duration of the DRX cycle is greater than or equal to first duration, for example, the first duration is 400 ms, that is, duration of a sleep period of the DRX cycle is relatively long, the first sleep mode is the ultra-deep sleep mode, to save more energy. If the duration of the DRX cycle is less than the first duration and is greater than or equal to second duration, for example, the second duration is 40 ms, that is, the duration of the sleep period of the DRX cycle is moderate, the first sleep mode is the light sleep mode. In the light sleep mode, both sleep duration of the terminal and duration required for waking up the terminal are relatively moderate, so that both a data transmission latency and terminal energy-saving can be considered. If the duration of the DRX cycle is less than the second duration, that is, the duration of the sleep period of the DRX cycle is relatively short, the first sleep mode is the micro-sleep mode, to ensure that the terminal can be woken up in a timely manner, thereby further ensuring a data transmission latency.

Alternatively, in another possible manner, the terminal may determine, based on a type of a DRX cycle and whether data transmission exists, a specific sleep mode to be entered. If the DRX cycle is a DRX long cycle, duration of a sleep period of the DRX long cycle is relatively, and the first sleep mode is the ultra-deep sleep mode, to save more energy. If the DRX cycle is a DRX short cycle, and no data is received or sent in the DRX short cycle, that is, duration of a sleep period of the DRX short cycle is moderate, the first sleep mode is the light sleep mode, to consider both the data transmission latency and terminal energy-saving. If the DRX cycle is the DRX short cycle, and data is received or sent in the DRX short cycle, that is, the duration of the sleep period of the DRX short cycle is relatively short, the first sleep mode is the micro-sleep mode, to further ensure the data transmission latency.

It may be understood that the DRX cycle mentioned in S1501 may be an existing DRX cycle, or may be the foregoing new DRX cycle. This is not specifically limited herein.

It may be further understood that, that the terminal enters the first sleep mode when the non-active time of the DRX cycle starts may be understood as that the terminal immediately enters the first sleep mode after the non-active time of the DRX cycle starts, or may be understood as that the terminal enters the first sleep mode after a period of time after the non-active time of the DRX cycle starts. In other words, "when a non-active time of a DRX cycle starts" mentioned in this embodiment of this application is a relatively broad definition.

S1502: The network device sends the fourth indication information to the terminal, and the terminal receives the fourth indication information.

The fourth indication information may indicate that the terminal needs to be woken up. A specific implementation principle is similar to that of the second indication information. Reference may be made for understanding. Details are not described again.

S1503: The terminal is woken up in the first sleep mode in response to the fourth indication information.

After being woken up in the first sleep mode, the terminal may enter the DRX cycle. For a specific implementation principle, refer to related descriptions of the method shown in FIG. 7. Details are not described herein again.

For ease of understanding, the following is described by using an example.

As shown in FIG. 4, the UE first uses the DRX long cycle, and there is data transmission in an active time of the DRX long cycle. After determining that the DRX long cycle ends, the UE enters the DRX short cycle. In addition, the UE enters the ultra-deep sleep mode in a non-active time of the DRX long cycle. Then, the UE receives an LP-WUS signal from a RAN device, is woken up from the ultra-deep sleep mode, and enters the first DRX short cycle. Because there is data transmission in an active time of the first DRX short cycle, duration of a non-active time of the DRX short cycle is compressed. Therefore, after the active time of the DRX short cycle ends and the non-active time of the DRX short cycle starts, the UE enters the micro-sleep mode. Then, the UE receives an LP-WUS signal from the RAN device, is woken up from the micro-sleep mode, and enters the second DRX short cycle. Because there is no data transmission in an active time of the second DRX short cycle, after the active time of the DRX short cycle ends and a non-active time of the DRX short cycle starts, the UE enters the light sleep mode. Because there is no data transmission in the second DRX short cycle, it indicates that data transmission of the UE may end. Therefore, the UE receives an LP-WUS signal from the RAN device, is woken up from the light sleep mode, enters the DRX long cycle, and so on.

It may be understood that the methods shown in FIG. 7 and FIG. 15 may also be combined. For example, in the method shown in FIG. 7, a sleep mode in which the terminal may be in the non-active time may alternatively be determined based on the duration of the DRX cycle or duration of the non-active time of the DRX cycle. For another example, in the method shown in FIG. 15, a secondary radio of the terminal may also be configured to monitor, in at least a partial time of the non-active time of the DRX cycle and on a preset bandwidth part, indication information used to wake up a main radio of the terminal, and the bandwidth part may also be a bandwidth configured for the secondary radio of the terminal to use in the at least partial time.

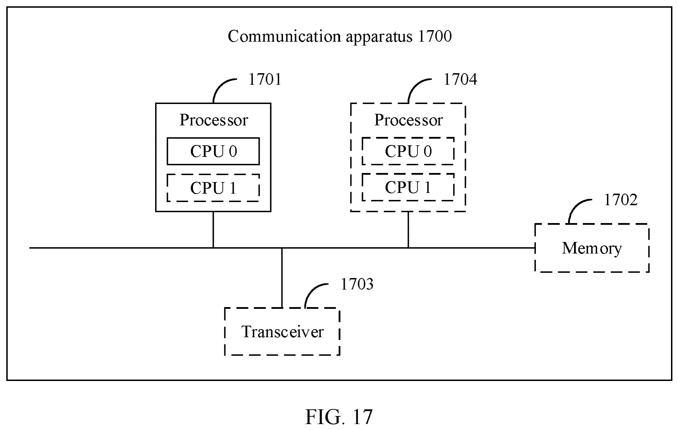

The foregoing describes, in detail with reference to FIG. 7 to FIG. 15, the communication methods provided in embodiments of this application. Communication apparatuses configured to perform the communication methods provided in embodiments of this application are described below in detail with reference to FIG. 16 and FIG. 17.

FIG. 16 is a diagram 1 of a structure of a communication apparatus according to an embodiment of this application. For example, as shown in FIG. 16, the communication apparatus 1600 includes a transceiver module 1601 and a processing module 1602. For ease of description, FIG. 16 shows only main components of the communication apparatus.

In some embodiments, the communication apparatus 1600 may be used in the communication system shown in FIG. 5, and perform a function of the terminal in the method shown in FIG. 7.

The transceiver module 1601 is configured to receive first indication information. The processing module 1602 is configured to enter a first sleep mode in response to the first indication information. The first indication information indicates a terminal to enter the first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal.

In a possible design solution, the transceiver module 1601 is further configured to receive the first indication information in an active time of a discontinuous reception DRX cycle.

Optionally, the processing module 1602 is further configured to disable, in response to the first indication information, at least one timer configured in the active time, where the at least one timer includes a DRX-inactivity timer or a DRX-on duration timer.

In a possible design solution, the transceiver module 1601 is further configured to receive the first indication information in a non-active time of the DRX cycle.

In a possible design solution, the transceiver module 1601 is further configured to receive the first indication information in a second sleep mode. The second sleep mode is a sleep mode that is different from the first sleep mode and that is in the plurality of sleep modes.

In a possible design solution, the transceiver module 1601 is further configured to receive second indication information, where the second indication information indicates that the terminal needs to be woken up. The processing module 1602 is further configured to: in response to the second indication information, be woken up in the first sleep mode, and enter any one of the following times: an active time, a DRX short cycle, or a DRX long cycle. The second indication information indicates that the terminal needs to be woken up.

Optionally, if the first sleep mode is a micro-sleep mode, the active time is entered. Alternatively, if the first sleep mode is a light sleep mode, the DRX short cycle is entered, and in the DRX short cycle. Alternatively, if the first sleep mode is an ultra-deep sleep mode, the DRX long cycle is entered.

Optionally, the second indication information further indicates at least one of the following: whether to zero out an existing count of the DRX short cycle, whether to reuse the count of the DRX short cycle, or a quantity of DRX short cycles.

Optionally, the second indication information further indicates a quantity of DRX long cycles.

Optionally, a time of being woken up in the first sleep mode is a first time. If the first sleep mode is a micro-sleep mode, a time at which the second indication information is received is the first time. Alternatively, if the first sleep mode is a light sleep mode, a time at which the second indication information is received is a second time before the first time, and a time difference between the first time and the second time is duration required for being woken up in the light sleep mode. Alternatively, if the first sleep mode is an ultra-deep sleep mode, a time at which the second indication information is received is a third time before the first time, a time difference between the first time and the third time is duration required for being woken up in the ultra-deep sleep mode, and the time difference between the first time and the third time is greater than the time difference between the first time and the second time.

Optionally, the transceiver module 1601 is further configured to receive third indication information in the any time or after the any time. The third indication information indicates the terminal to enter the DRX cycle or a sleep mode in the plurality of sleep modes.

Optionally, entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, the second indication information used to wake up the main radio. For example, the bandwidth part is a bandwidth configured for the secondary radio to use in the at least partial time.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform a function of the terminal in the method shown in FIG. 7 in the foregoing method.

It may be understood that the communication apparatus 1600 may be a terminal, or may be a chip (system) or another part or component that may be disposed in a terminal, or may be an apparatus including a terminal. This is not limited in this application.

In addition, for technical effects of the communication apparatus 1600, refer to technical effects of the communication method shown in FIG. 7. Details are not described herein again.

In some other embodiments, the communication apparatus 1600 may be applied to the communication system shown in FIG. 5, and perform a function of the network device in the method shown in FIG. 7.

The processing module is configured to obtain first indication information. The transceiver module is configured to send the first indication information to the terminal. The first indication information indicates the terminal to enter a first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal.

In a possible design solution, the transceiver module is further configured to send the first indication information to the terminal in an active time of a discontinuous reception DRX cycle of the terminal.

In a possible design solution, the transceiver module is further configured to send the first indication information to the terminal in a non-active time of a DRX cycle of the terminal.

In a possible design solution, the transceiver module is further configured to send the first indication information to the terminal when the terminal is in a second sleep mode, where the second sleep mode is a sleep mode that is different from the first sleep mode and that is in the plurality of sleep modes.

In a possible design solution, the transceiver module is further configured to send second indication information to the terminal, where the second indication information indicates that the terminal needs to be woken up.

Optionally, if the first sleep mode is a micro-sleep mode, the terminal enters the active time after being woken up; or if the first sleep mode is a light sleep mode, the terminal enters a DRX short cycle after being woken up; or if the first sleep mode is an ultra-deep sleep mode, the terminal enters a DRX long cycle after being woken up.

Optionally, the second indication information further indicates at least one of the following: whether to zero out an existing count of the DRX short cycle, whether to reuse the count of the DRX short cycle, or a quantity of DRX short cycles.

Optionally, the second indication information further indicates a quantity of DRX long cycles.

Optionally, a time at which the terminal is woken up is a first time; if the first sleep mode is a micro-sleep mode, a time at which the second indication information is sent to the terminal is the first time; or if the first sleep mode is a light sleep mode, a time at which the second indication information is sent to the terminal is a second time before the first time, and a time difference between the first time and the second time is duration required for being woken up in the light sleep mode; or if the first sleep mode is an ultra-deep sleep mode, a time at which the second indication information is sent to the terminal is a third time before the first time, a time difference between the first time and the third time is duration required for being woken up in the ultra-deep sleep mode, and the time difference between the first time and the third time is greater than the time difference between the first time and the second time.

Optionally, the transceiver module is further configured to send third indication information to the terminal in the any time or after the any time, where the third indication information indicates the terminal to enter the DRX cycle or a sleep mode in the plurality of sleep modes.

Optionally, that the terminal enters the first sleep mode means that a main radio enters the first sleep mode, and that the terminal is woken up means that the main radio is woken up; and a secondary radio is configured to monitor, in at least a partial time of the non-active time of the DRX cycle and on a preset bandwidth part, the second indication information used to wake up the main radio. For example, the bandwidth part is a bandwidth configured for the secondary radio to use in the at least partial time.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform a function of the network device in the method shown in FIG. 7 in the foregoing method.

It may be understood that the communication apparatus 1600 may be a network device, or may be a chip (system) or another part or component that may be disposed in a network device, or may be an apparatus including a network device. This is not limited in this application.

In addition, for technical effects of the communication apparatus 1600, refer to technical effects of the communication method shown in FIG. 7. Details are not described herein again.

In some other embodiments, the communication apparatus 1600 may be applied to the communication system shown in FIG. 5, and perform a function of the terminal in the method shown in FIG. 15.

The processing module is configured to enter a first sleep mode when a non-active time of a discontinuous reception DRX cycle starts. The transceiver module is configured to receive fourth indication information. The processing module is further configured to be woken up in the first sleep mode in response to the fourth indication information. The first sleep mode is a sleep mode that corresponds to duration of the DRX cycle and that is in a plurality of sleep modes, and duration required for waking up a terminal in the plurality of sleep modes is different from each other. The fourth indication information indicates that the terminal needs to be woken up.

In a possible design solution, if the duration of the DRX cycle is greater than or equal to first duration, the first sleep mode is an ultra-deep sleep mode. If the duration of the DRX cycle is less than the first duration and is greater than or equal to second duration, the first sleep mode is light sleep mode, and the terminal is in the light sleep mode. If the duration of the DRX cycle is less than the second duration, the first sleep mode is a micro-sleep mode, to ensure that the terminal can be woken up in a timely manner. Duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

In another possible design solution, if the DRX cycle is a DRX long cycle, the first sleep mode is an ultra-deep sleep mode. If the DRX cycle is a DRX short cycle, and no data is received or sent in the DRX short cycle, the first sleep mode is a light sleep mode. If the DRX cycle is the DRX short cycle, and data is received or sent in the DRX short cycle, the first sleep mode is a micro-sleep mode. Duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

In a possible design solution, entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, the fourth indication information used to wake up the main radio.

Optionally, the bandwidth part is a bandwidth configured for the secondary radio to use in the at least partial time.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform a function of the terminal in the method shown in FIG. 15 in the foregoing method.

It may be understood that the communication apparatus 1600 may be a terminal, or may be a chip (system) or another part or component that may be disposed in a terminal, or may be an apparatus including a terminal. This is not limited in this application.

In addition, for technical effects of the communication apparatus 1600, refer to technical effects of the communication method shown in FIG. 15. Details are not described herein again.

FIG. 17 is a diagram 2 of a structure of a communication apparatus according to an embodiment of this application. For example, the communication apparatus may be a terminal device or a network device, or may be a chip (system) or another part or component disposed in the terminal device or the network device. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing unit, CPU), may be an application specific integrated circuit (application specific integrated circuit, ASIC), or may be configured as one or more integrated circuits that implement embodiments of this application, for example, one or more microprocessors (digital signal processor, DSP), or one or more field programmable gate arrays (field programmable gate array, FPGA).

Optionally, the processor 1701 may perform various functions of the communication apparatus 1700 by running or executing a software program stored in the memory 1702 and invoking data stored in the memory 1702, for example, perform the communication method shown in FIG. 7 or FIG. 15.

During specific implementation, in an embodiment, the processor 1701 may include one or more CPUs, such as a CPU 0 and a CPU 1 shown in FIG. 17.

During specific implementation, in an embodiment, the communication apparatus 1700 may alternatively include a plurality of processors such as the processor 1701 and a processor 1704 shown in FIG. 17. Each of the processors may be a single-core processor (single-CPU), or may be a multi-core processor (multi-CPU). The processor herein may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiments. Details are not described herein again.

Optionally, the memory 1702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1702 may be integrated with the processor 1701; or may exist independently, and is coupled to the processor 1701 through an interface circuit (not shown in FIG. 17) of the communication apparatus 1700. This is not specifically limited in embodiments of this application.

The transceiver 1703 is configured to communicate with another communication apparatus. For example, the communication apparatus 1700 is a terminal device, and the transceiver 1703 may be configured to communicate with a network device or communicate with another terminal device. For another example, the communication apparatus 1700 is a network device, and the transceiver 1703 may be configured to communicate with a terminal device or communicate with another network device. When the communication apparatus 1700 is a terminal device or a network device, the transceiver 1703 may be a radio frequency module. When the communication apparatus 1700 is a chip (system) or another part or component in the terminal device or the network device, the transceiver 1703 may be an input/output interface, a pin, a circuit, or the like.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701; or may exist independently, and is coupled to the processor 1701 through an interface circuit (not shown in FIG. 17) of the communication apparatus 1700. This is not specifically limited in embodiments of this application.

It may be understood that a structure of the communication apparatus 1700 shown in FIG. 17 does not constitute a limitation on the communication apparatus. An actual communication apparatus may include more or fewer components than those shown in the figure, or combine some components, or have different component arrangements.

In addition, for technical effects of the communication apparatus 1700, refer to the technical effects of the methods in the foregoing method embodiments. Details are not described herein again.

It should be understood that, the processor in embodiments of this application may be a central processing unit (central processing unit, CPU). The processor may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are entirely or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, wireless, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium, or the like. The semiconductor medium may be a solid state drive.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the above-described apparatus embodiment is merely an example. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computor device (which may be a personal computer, a server, a network device, or the like) to perform all or some of the steps of the methods described in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first indication information, wherein the first indication information indicates a terminal to enter a first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal; and
entering the first sleep mode in response to the first indication information.

2. The method according to claim 1, wherein receiving the first indication information comprises:
receiving the first indication information in an active time of a discontinuous reception DRX cycle.

3. The method according to claim 2, wherein the method further comprises:
disabling, in response to the first indication information, at least one timer configured in the active time, wherein the at least one timer comprises a DRX-inactivity timer or a DRX-on duration timer.

4. The method according to claim 1, wherein receiving the first indication information comprises:
receiving the first indication information in a non-active time of a DRX cycle.

5. The method according to claim 1, wherein receiving the first indication information comprises:
receiving the first indication information in a second sleep mode, wherein the second sleep mode is a sleep mode that is different from the first sleep mode and that is in the plurality of sleep modes.

6. The method according to any one of claims 1 to 5, wherein the method further comprises:
receiving second indication information, wherein the second indication information indicates that the terminal needs to be woken up; and
in response to the second indication information, being woken up in the first sleep mode, and entering any one of the following times: an active time, a DRX short cycle, or a DRX long cycle.

7. The method according to claim 6, wherein
if the first sleep mode is a micro-sleep mode, entering the active time; or
if the first sleep mode is a light sleep mode, entering the DRX short cycle; or
if the first sleep mode is an ultra-deep sleep mode, entering the DRX long cycle.

8. The method according to claim 7, wherein
the second indication information further indicates at least one of the following: whether to zero out an existing count of the DRX short cycle, whether to reuse the count of the DRX short cycle, or a quantity of DRX short cycles.

9. The method according to claim 7, wherein
the second indication information further indicates a quantity of DRX long cycles.

10. The method according to claim 6, wherein
a time of being woken up in the first sleep mode is a first time;
if the first sleep mode is a micro-sleep mode, a time at which the second indication information is received is the first time; or
if the first sleep mode is a light sleep mode, a time at which the second indication information is received is a second time before the first time, and a time difference between the first time and the second time is duration required for being woken up in the light sleep mode; or
if the first sleep mode is an ultra-deep sleep mode, a time at which the second indication information is received is a third time before the first time, a time difference between the first time and the third time is duration required for being woken up in the ultra-deep sleep mode, and the time difference between the first time and the third time is greater than the time difference between the first time and the second time.

11. The method according to any one of claims 6 to 10, wherein the method further comprises:
receiving third indication information in the any time or after the any time, wherein the third indication information indicates the terminal to enter any one of the following times: the active time, the DRX short cycle, or the DRX long cycle, or the third indication information indicates the terminal to enter a sleep mode in the plurality of sleep modes.

12. The method according to any one of claims 1 to 11, wherein entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, indication information used to wake up the main radio.

13. The method according to claim 12, wherein
the bandwidth part is a bandwidth configured for the secondary radio to use in the at least partial time.

14. A communication method, wherein the method comprises:
obtaining first indication information, wherein the first indication information indicates a terminal to enter a first sleep mode, the first sleep mode is a sleep mode in a plurality of sleep modes of the terminal, duration required for waking up the terminal in the plurality of sleep modes is different from each other, and duration required for waking up the terminal in the first sleep mode matches a service requirement of the terminal; and
sending the first indication information to the terminal.

15. The method according to claim 14, wherein sending the first indication information to the terminal comprises:
sending the first indication information to the terminal in an active time of a discontinuous reception DRX cycle of the terminal.

16. The method according to claim 14, wherein sending the first indication information to the terminal comprises:
sending the first indication information to the terminal in a non-active time of a DRX cycle of the terminal.

17. The method according to claim 14, wherein sending the first indication information to the terminal comprises:
sending the first indication information to the terminal when the terminal is in a second sleep mode, wherein the second sleep mode is a sleep mode that is different from the first sleep mode and that is in the plurality of sleep modes.

18. The method according to any one of claims 14 to 17, wherein the method further comprises:
sending second indication information to the terminal, wherein the second indication information indicates that the terminal needs to be woken up.

19. The method according to claim 18, wherein
if the first sleep mode is a micro-sleep mode, the terminal enters the active time after being woken up; or
if the first sleep mode is a light sleep mode, the terminal enters a DRX short cycle after being woken up; or
if the first sleep mode is an ultra-deep sleep mode, the terminal enters a DRX long cycle after being woken up.

20. The method according to claim 19, wherein
the second indication information further indicates at least one of the following: whether to zero out an existing count of the DRX short cycle, whether to reuse the count of the DRX short cycle, or a quantity of DRX short cycles.

21. The method according to claim 19, wherein
the second indication information further indicates a quantity of DRX long cycles.

22. The method according to claim 18, wherein
a time at which the terminal is woken up is a first time;
if the first sleep mode is a micro-sleep mode, a time at which the second indication information is sent to the terminal is the first time; or
if the first sleep mode is a light sleep mode, a time at which the second indication information is sent to the terminal is a second time before the first time, and a time difference between the first time and the second time is duration required for being woken up in the light sleep mode; or
if the first sleep mode is an ultra-deep sleep mode, a time at which the second indication information is sent to the terminal is a third time before the first time, a time difference between the first time and the third time is duration required for being woken up in the ultra-deep sleep mode, and the time difference between the first time and the third time is greater than the time difference between the first time and the second time.

23. The method according to any one of claims 18 to 22, wherein the method further comprises:
sending third indication information to the terminal in the any time or after the any time, wherein the third indication information indicates the terminal to enter any one of the following times: the active time, the DRX short cycle, or the DRX long cycle, or the third indication information indicates the terminal to enter a sleep mode in the plurality of sleep modes.

24. The method according to any one of claims 18 to 23, wherein that the terminal enters the first sleep mode means that a main radio enters the first sleep mode, and that the terminal is woken up means that the main radio is woken up; and a secondary radio is configured to monitor, in at least a partial time of the non-active time of the DRX cycle and on a preset bandwidth part, the second indication information used to wake up the main radio.

25. The method according to claim 24, wherein
the bandwidth part is a bandwidth configured for the secondary radio to use in the at least partial time.

26. A communication method, wherein the method comprises:
entering a first sleep mode when a non-active time of a discontinuous reception DRX cycle starts, wherein the first sleep mode is a sleep mode that corresponds to duration of the DRX cycle and that is in a plurality of sleep modes, and duration required for waking up a terminal in the plurality of sleep modes is different from each other;
receiving fourth indication information, wherein the fourth indication information indicates that the terminal needs to be woken up; and
being woken up in the first sleep mode in response to the fourth indication information.

27. The method according to claim 26, wherein
if the duration of the DRX cycle is greater than or equal to first duration, the first sleep mode is an ultra-deep sleep mode;
if the duration of the DRX cycle is less than the first duration and is greater than or equal to second duration, the first sleep mode is a light sleep mode; or
if the duration of the DRX cycle is less than the second duration, the first sleep mode is a micro-sleep mode, wherein
duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

28. The method according to claim 26, wherein
if the DRX cycle is the DRX long cycle, the first sleep mode is an ultra-deep sleep mode;
if the DRX cycle is the DRX short cycle, and no data is received or sent in the DRX short cycle, the first sleep mode is a light sleep mode; or
if the DRX cycle is the DRX short cycle, and data is received or sent in the DRX short cycle, the first sleep mode is a micro-sleep mode, wherein
duration required for waking up the terminal in the micro-sleep mode is less than duration required for waking up the terminal in the light sleep mode, and the duration required for waking up the terminal in the light sleep mode is less than duration required for waking up the terminal in the ultra-deep sleep mode.

29. The method according to any one of claims 26 to 28, wherein entering the first sleep mode means that a main radio enters the first sleep mode, and being woken up in the first sleep mode means that the main radio is woken up in the first sleep mode; and a secondary radio is configured to monitor, in at least a partial time of the non-active time of the DRX cycle and on a preset bandwidth part, the fourth indication information used to wake up the main radio.

30. The method according to claim 29, wherein
the bandwidth part is a bandwidth configured for the secondary radio to use in the at least partial time.

31. A communication apparatus, wherein the apparatus comprises modules configured to perform the method according to any one of claims 1 to 30.

32. A communication apparatus, wherein the communication apparatus comprises a processor and a memory, the memory is configured to store computer instructions, and when the processor executes the instructions, the communication apparatus is enabled to perform the method according to any one of claims 1 to 30.

33. A computer-readable storage medium, wherein the computer-readable storage medium comprises a computer program or instructions, and when the computer program or the instructions are run on a computer, the computer is enabled to perform the method according to any one of claims 1 to 30.
